# EUROPÄISCHE PATENTANMELDUNG

(11) **EP 1 417 937 A1**
(43) Veröffentlichungstag der Anmeldung: **12.05.2004**
(21) Anmeldenummer: 02405948.7
(22) Anmeldetag: 05.11.2002
(51) Int. Cl.: A61C 5/02, A61C 19/02, A61C 3/04

(54) **Endodontischer Behälter**

(71) Anmelder: vom Brocke, Martin, 7012 Felsberg (CH)
(72) Erfinder: vom Brocke, Martin, 7012 Felsberg (CH)

(57) **Zusammenfassung**

Der endodontische Behälter besteht aus einer nach oben hin offenen, kreiskegelstumpfförmigen Box (1) mit passendem Deckel (2) und einer an einem Absatz (3) in der Innenseite der Boxenwand aufgehängten und aus der Box herausnehmbaren Scheibe (4) zur Halterung von manuellen und maschinellen Wurzelbehandlungsinstrumenten (5), welche nach ihrer Grösse, Konizität und Länge zirkulär um einen Griff (10) sternförmig angeordnet sind. Der Bereich zwischen diesen Instrumenten und dem Boxenboden (7) dient als Verstauungsraum (11) für Röhrchen (12), in welche weitere Hilfsmittel der Endodontie (13), wie zum Beispiel Stifte für die Kanaltrocknung, oder für die Kanalobturation, Wattepellets und spezielle aber nur selten gebrauchte Instrumente der Endodontie eingelegt werden können. Die für die Wurzelbehandlungsinstrumente (5) perforierte Scheibe und die Aussenfläche des Deckels zeigen schematisch eine eingravierte Zeichnung (Fig. 2), welche die Anordnung dieser Instrumente darstellt, was deren Auffinden und das Datieren des Gebrauchs ermöglicht.

## Beschreibung

Die Erfindung gibt dem Zahnarzt die Möglichkeit, sich je nach Anatomie des Zahnwurzelkanals für eine manuelle und/oder eine maschinelle Wurzelkanalaufbereitung zu entscheiden und anschliessend den Kanal mit entsprechend grossen Gutta Percha Stiften zu verschliessen. Die im endodontischen Behälter eingehängte und herausnehmbare Scheibe (4) - zur Halterung von Wurzelbehandlungsinstrumenten (5) - ermöglicht die Auswahl von Feilensequenzen, welche sich nach der Wurzelkrümmung und der Kanalgrösse richten: Gerade Kanäle können mit Feilen aufbereitet werden, welche eine höhere Konizität aufweisen, weil ihre höhere Steifheit bei geraden Kanälen keine Behinderung für den Zahnarzt darstellt und für stärker gekrümmte Kanäle lässt sich eine Feilenkombination mit weniger starren und somit weniger konischen Feilen auswählen. Die für die Kanalobturation nötigen Stifte, Wattepellets und seltener gebrauchte Instrumente können in entsprechend kleinen zylinderförmigen Röhrchen (13) im Verstauungsraum untergebracht werden.

Es zeigen:
- **Fig. 1:**: Geschlossener endodontischer Behälter im Querschnitt
- **Fig. 2:**: Geöffneter endodontischer Behälter in der Aufsicht

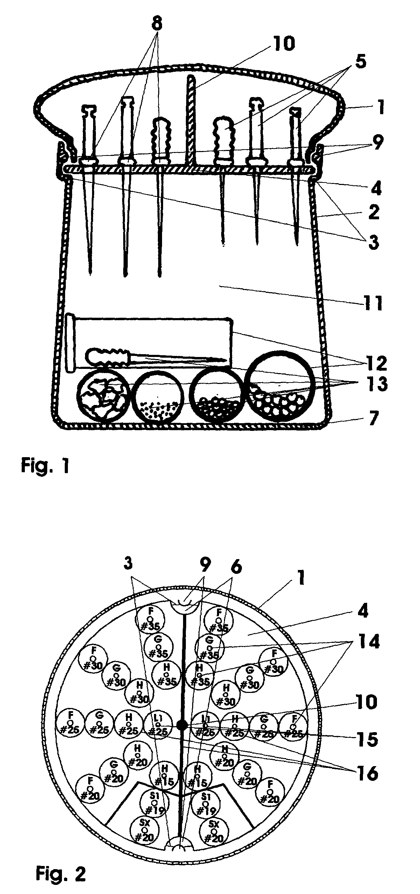

Die z.B. 89 mm hohe und im Durchmesser 70 mm breite Erfindung besteht aus einer nach oben hin geöffneten geraden kreiskegelstumpfförmigen Box (1) mit einem konvex gewölbten, seitlich leicht überstehenden Deckel (2) und einem auf einem zirkulären Absatz (3) in der Innenseite der Boxenwand eingehängten schablonenartigen Scheibe (4) für Wurzelbehandlungsinstrumente (5). Der Deckel kann nach innen in die Box eingesetzt werden und wird mit einem Steck-Drehmechanismus über zwei Arretierausbeulung (9) befestigt. Durch ein Drehen der Scheibe unter die Arretierausbeulungen bleibt sie auch bei einem umgekippten Behälter in ihrer Position. Die Scheibe besteht aus einem 2,5 mm dicken Kunststoff, ist rund mit zwei peripheren Aussparungen (6) für die Arretierausbeulungen und hat einen Durchmesser von 61 mm. Die Scheibe ist derart am Absatz der Boxenwand aufgehängt, dass die hindurch gesteckten Instrumente den Boden (7) des Behälters nicht berühren können. Dies deshalb, damit in den unter den Feilen befindliche Verstauungsraum (12) ohne eine definierte Ordnung zylinderförmige verschliessbare Röhrchen (13) für Gutta-Percha-Stifte, Papierspitzen, Wattepellets und seltener gebraucht Wurzelbehandlungsinstrumente abgelegt werden können. Im Zentrum der Scheibe befindet sich ein 2.5 mm dicker Griff (10) für das Herausnehmen der Scheibe. Dieser Griff ragt über die am nächsten stehenden Feilen hinaus, damit er ohne die Instrumente zu berühren erfasst werden kann. Der Deckel ist wegen dem Griff im Zentrum entsprechend konvex gewölbt, damit der Abstand der kleinen Feilen zum Deckel nicht grösser wird als die Länge ihrer Arbeitsteile und er ist seitlich leicht überstehend, damit der endodontische Behälter leichter erfasst werden kann. Die Scheibe ist für die Abfolge des Feilengebrauchs nach einem klar definierten Schema (Fig. 2) gelocht und entsprechend angeschrieben. Diese Löcher sind sternförmig auf drei konzentrischen Bahnen in einem für den praktischen Gebrauch und die erlaubte Feilenabfolge sinnvollen Abstand um die Achse angeordnet. Die Anordnung in einer Sternenform ist auch deshalb gewählt, damit das Zuordnen bzw. das Ergreifen der Feilen von aussen her erleichtert ist. Die Löcher haben eine dem Durchmesser der Feilen angepassten Durchmesser, damit die Feilen in ihrer Halterung bestmöglich fixiert sind. Die Feilen werden nach ihrer Länge - 25 mm bzw. 21 mm - in spiegelbildlich (16) symmetrische Positionen zugeordnet und mit aufgeschobenen Silikonstopps (8) in die Scheibe gesteckt. Zwei nicht auf den konzentrischen Bahnen lokalisierte Löcher (15) sind zur Platzierung von Lentulos reserviert.

Die Materialien des endodontischen Behälters sind so gewählt, dass sie durch einen fachgerechten Gebrauch {Sterilisation, Reinigung etc.} keinen Schaden nehmen. Die Box und der Deckel bestehen aus Chromstahl, die Scheibe und die Röhrchen bestehen aus Kunststoff. Auf der Oberseite des Deckels ist ein Schema der Feilenpositionen eingraviert, damit zur Quantifizieren des einzelnen Feilengebrauchs über die jeweiligen Feilenareale im Durchmesser 7 mm grosse, ISOfarbene Kleber aufgebracht werden können. Nach sechsmaligem Gebrauch einer Feile, erkennbar durch sechs auf den obgenannten Klebern eingezeichnete Punkte, wird die entsprechende Feilenstelle durch einen neuen, der Feile farblich entsprechenden Aufkleber verdeckt, die alte Feile entsorgt und durch eine neue Feile ersetzt. Dadurch reduziert sich die Gefahr eines Feilenbruchs. Die Häufigkeit für den Gebrauch einer Feile wird durch die Herstellerfirma bestimmt und kann für die einzelnen Feilentypen unterschiedlich sein.

Der endodontische Behälter kann wegen seines geringen Gewichtes auch auf dem Schwebetisch des Behandlungsstuhles abgelegt werden und die Feilen sind durch die Box vor einer Kontamination geschützt. Die Feilen können nach ihrem Gebrauch mit entsprechend auf dem Markt erhältlichen Bürsten gereinigt, zurück in die Scheibe gesteckt und mit dem endodontischen Behälter im Autoklaven sterilisiert werden.

## Patentansprüche

1. Endodontischer Behälter, **dadurch gekennzeichnet, dass** er aus einer nach oben hin offenen kreiskegelstumpfförmigen Box (1), einem zum Verschluss der Box passenden Deckel (2) und einer an einem Absatz (3) in der Innenseite der Boxenwand aufgehängten ebenfalls in der Form und der Grösse passenden und an einem Griff (10) herausnehmbaren Scheibe (4) zur Halterung von hindurchgesteckten manuelle und maschinelle Wurzelbehandlungsinstrumenten (5) zusammengesetzt ist, welche derart an dem Absatz aufgehängt ist, dass der Raum zwischen den hindurchgesteckten Feilen und dem Boxenboden (7) als Verstauungsraum (11) für Röhrchen (12) dient, in welchen sich weitere Hilfsmittel der Endodontie (13) einsortieren lassen.

2. Endodontischer Behälter nach Patentanspruch 1, **dadurch gekennzeichnet, dass** die Löcher (14) für die Feilen sternenförmig auf konzentrischen Bahnen - nach der Feilenkonizität und Feilengrösse eingereiht - um den Griff (10) angeordnet sind, zur Zuordnung der Feilen schematisch beschriftet und in ihren Durchmessern den Durchmessern der Feilen angepasst sind.

3. Endodontischer Behälter nach Patentanspruch 1 und 2, **dadurch gekennzeichnet, dass** neben den konzentrisch angeordneten Bahnen auch Löcher (15) zur Aufnahme von Instrumenten der Kanalobturation vorhanden sein können, welche entsprechend angepasste Lochdurchmesser besitzen.

4. Endodontischer Behälter nach Patentanspruch 1, **dadurch gekennzeichnet, dass** sich auf der Aussenseite der Box oder des Deckels ein der Scheibe entsprechendes Schema (Fig. 2) zu den Positionen der Wurzelbehandlungsinstrumente (5) befindet, welches eine Quantifizierung des Feilengebrauchs mittels ISO-farbener Kleber ermöglicht.

5. Endodontischer Behälter nach Patentanspruch 1, **dadurch gekennzeichnet, dass** der Deckel (2) innen oder aussen an seiner in der Form angepassten Box (1) mit einem Schraubund / oder Steckmechanismus befestigt werden kann.

6. Endodontischer Behälter nach Patentanspruch 1, **dadurch gekennzeichnet, dass** Arretiervorrichtungen (6)(9) zur Fixation der Scheibe (4) vorhanden sein können.

7. Endodontischer Behälter nach Patentanspruch 1, **dadurch gekennzeichnet, dass** der Deckel (2) konvex, konkav oder gerade und die Box (1) auch zylindrisch geformt sein kann.

8. Endodontischer Behälter nach Patentanspruch 1, **dadurch gekennzeichnet, dass** der Abstand zwischen dem Deckel (2) und der Scheibe (4) so gewählt ist, dass die in die Scheibe (4) eingeordneten Wurzelbehandlungsinstrumente (5) bei einer verschlossenen Box (1) selbst nach einem starken Schütteln mit dem Deckel (2) nach unten nicht aus ihrer Halterung fallen können.

9. Endodontischer Behälter nach Patentanspruch 1 bis 8, **dadurch gekennzeichnet, dass** das Material der einzelnen Teile so gewählt ist, dass es bei einer fachgerechten Reinigung oder Sterilisation keinen Schaden nimmt oder durch Korrosionsprodukte allenfalls dem Patienten schaden könnte.
